(19) **Europäisches Patentamt**

**European Patent Office**

**Office européen des brevets**

(11) **EP 0 827 017 B1**

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(51) Int Cl.$^7$: **G03B 27/73**, H04N 1/60

(21) Anmeldenummer: **96810499.2**

(22) Anmeldetag: **26.07.1996**

(54) **Verfahren zur Kalibrierung eines fotografischen Kopiergeräts**

A method of calibrating a photographic printer

Procédé pour étalonner une imprimante photographique

(84) Benannte Vertragsstaaten:
**CH DE FR GB IT LI**

(43) Veröffentlichungstag der Anmeldung:
**04.03.1998 Patentblatt 1998/10**

(73) Patentinhaber: **GRETAG IMAGING AG**
**8105 Regensdorf (CH)**

(72) Erfinder:
• **Zolliker,Peter**
**8157 Dielsdorf (CH)**
• **Kraft, Walter**
**8049 Zürich (CH)**
• **Wacker, Rudolf**
**5022 Rombach (CH)**

(74) Vertreter: **Schwabe - Sandmair - Marx**
**Stuntzstrasse 16**
**81677 München (DE)**

(56) Entgegenhaltungen:
**EP-A- 0 475 897**        **US-A- 4 335 956**
**US-A- 5 218 671**       **US-A- 5 333 069**

**Beschreibung**

Die Erfindung betrifft ein Verfahren zur Kalibrierung eines fotografischen Kopiergeräts gemäss dem Oberbegriff des unabhängigen Patentanspruchs.

Kopierverfahren sind in zahlreichen unterschiedlichen Varianten bekannt. Im häufigsten Fall handelt es sich dabei um Verfahren, bei welchen die Bildfelder eines belichteten Negativfilms auf Fotopapier aufkopiert werden. Im folgenden wird der Einfachheit halber auf Negativfilme und Fotopapier Bezug genommen, wobei die Negativfilme bzw. die Bildfelder der Negativfilme repräsentativ für Kopiervorlagenmaterial bzw. Kopiervorlagen im allgemeinen stehen (dazu zählen insbesondere auch Diapositive), und das Fotopapier bzw. die Papierbilder repräsentativ für das Kopiermaterial bzw. für die Kopien (dazu zählen insbesondere auch Folien) stehen.

Da normalerweise in den Kopiergeräten nicht mit standardisierten, einheitlichen Kopierlichtmengen gearbeitet werden kann, werden die Bildfelder der Negativfilme analysiert. Dies erfolgt typischerweise so, dass in einer Messstation des Kopiergeräts zunächst das zu kopierende Bildfeld des Negativfilms bereichsweise, bevorzugt punktweise, mit Hilfe von Messlicht abgetastet wird. Das von jedem Abtastbereich eines Bildfelds des Negativfilms transmittierte oder remittierte Messlicht wird einer Detektoranordnung zugeführt, spektral zerlegt und in wellenlängen- und intensitätsabhängige elektrische Messignale umgesetzt. Die elektrischen Messignale werden anschliessend digitalisiert und mit ihrer Hilfe werden bildfeldspezifische Messdaten ermittelt. Mit Hilfe der gewonnenen Messdaten werden dann die erforderlichen Kopierlichtmengen ermittelt.

Damit die in den jeweiligen Farben (Blau, Grün, Rot) erforderlichen Kopierlichtmengen richtig ermittelt werden können, muss einerseits bekannt sein, wie ein bestimmtes Fotopapier auf Änderungen in den jeweiligen Farben des Kopierlichts reagiert, wie sich also die Papierdichte (über die Konzentration der Farbstoffe Gelb, Magenta, Cyan) ändert in Abhängigkeit von einer Änderung des Kopierlichts in den Farben Blau, Grün, Rot. Mit anderen Worten gesagt, es muss ein Modell für das Fotopapier - ein Papiermodell - bekannt sein, welches repräsentativ für die Absorptionseigenschaften des Fotopapiers bei Änderung der Belichtung ist (inklusive der Nebenabsorptionen des Fotopapiers; wenn das Fotopapier z.B. mit blauem Licht belichtet wird, hat dies eine Veränderung der optischen Dichte in allen drei Farben zur Folge).

Andererseits muss auch bekannt sein, wie das Fotopapier auf Änderungen der spektralen Filmdichte reagiert, also wie das Kopierlicht (Belichtung) geändert werden muss, um Abweichungen der tatsächlich gemessenen Dichte eines Negativs von der durchschnittlichen Filmdichte (also eine Abweichung von der "Norm") kompensieren zu können. Da hierzu der Film "mit den Augen des Fotopapiers" gesehen werden muss, handelt es sich hierbei um ein papierbezogenes Film-Modell.

Ist das papierbezogene Film-Modell optimal eingetestet, so ist es mit grosser Genauigkeit möglich, bei Negativbildfeldern, bei denen zwar jedes für sich genommen homogen belichtet ist, aber jedes Negativbildfeld gegenüber den anderen eine unterschiedliche Dichte aufweist, mit Hilfe dieses Modells und mit Hilfe der Messdaten des jeweiligen Negativbildfelds alle Negativbildfelder - unabhängig vom jeweiligen Filmtyp und von der jeweiligen Dichte der einzelnen Negativbildfelder - auf ein einheitliches Grau zu kopieren. Mit Hilfe des optimal eingetesteten Papiermodells ist eine Voraussage möglich, welche Änderung des Kopierlichts in der jeweiligen Farbe (Blau, Grün, Rot) erforderlich ist, um eine bestimmte Änderung der Papierdichte (in Gelb, Magenta, Cyan) zu erreichen.

Bei optimal eingetestetem - also kalibriertem - Kopiergerät werden im Betrieb mit Hilfe der ermittelten Messdaten des jeweiligen Negativbildfelds und mit Hilfe des papierbezogenen Film-Modells die für die Aufbelichtung erforderlichen Kopierlichtmengen ermittelt (das Papiermodell bzw. das inverse Papiermodell kommt nur im Falle eines Zweitdurchgangs zur Anwendung, nämlich dann, wenn die vom Bedienungspersonal eingegebenen Korrekturen in Belichtungskorrekturen umgesetzt werden müssen). Aufgrund der ermittelten Kopierlichtmengen werden entsprechende Steuersignale für in der Kopierstation des Kopiergeräts vorgesehene Farbfilter und Verschlüsse ermittelt, welche nach Massgabe der Steuersignale beim Aufkopieren des Negativbildfelds auf das Fotopapier in den Kopierstrahlengang eingebracht werden. Ist das Aufkopieren des Negativbildfelds auf das Fotopapier beendet, werden die auf diese Weise erstellten Kopien in einer Entwicklungsstation, die nicht notwendigerweise integrierter Bestandteil des Kopiergeräts sein muss, es aber sein kann, entwickelt.

Das vorstehende beschriebene Verfahren ist vom Grundsatz her absolut funktionstüchtig und auch leistungsfähig. Allerdings ist es insofern noch verbesserungswürdig, als bei dem bisher beschriebenen Verfahren das Eintesten oder Kalibrieren des Kopiergeräts mit Hilfe einer recht grossen Anzahl von speziellen Test-Negativbildfeldern erfolgt, die zwar - jedes für sich genommen - homogen belichtet sind, aber gegenüber den jeweils anderen Test-Negativbildfeldern unterschiedlich belichtet sind. Dabei werden eine Vielfalt von unterschiedlichen Filmtypen verwendet, da die verschiedenen Filmtypen unterschiedliche Verläufe der spektralen Dichte aufweisen, was ja beim Kopieren vom Kopiergerät ausgeglichen werden soll. Diese unterschiedlichen Test-Negativbildfelder werden vor Beginn des Produktionsprozesses auf Fotopapier aufkopiert, entwickelt und anschliessend densitometrisch ausgemessen. Anhand der entwickelten Test-Kopien kann dann das Bedienungspersonal feststellen, ob das Kopiergerät optimal eingetestet - also kalibriert - ist. Ist dies nicht der Fall, so wird die Kalibrierung aufgrund der Messdaten von Papier und Film sowie aufgrund der gespeicherten Belichtungswerte korrigiert. Beispielsweise wird für das Eintesten des papierbezogenen Film-Modells eine Testfilmrolle mit etwa zehn verschiedenen Filmtypen und einhundert Negativbildfeldern verwendet.

Während dieser Aufwand für einen Hochleistungsprinter noch akzeptabel ist, so ist ein derartiger Aufwand beim Eintesten für den Bereich der Minilabs nicht mehr akzeptabel. Nachteilig ist ausserdem, dass dann, wenn das Gerät einmal eingetestet worden ist (z.B. am Beginn jedes Tages), keine laufende Überwachung der Einstellungen des Kopiergeräts (und damit der beiden Modelle) erfolgt, allenfalls eine sporadische Überwachung - durch stichprobenartige Kontrolle der (Produktions-)Papierbilder oder durch regelmässige Erzeugung und Auswertung von Testbildern - durch das Bedienungspersonal.

Es ist daher eine Aufgabe der Erfindung, ein Verfahren zur Kalibrierung vorzuschlagen, bei dem einerseits die Optimierung der Modelle möglichst wenig aufwendig erfolgt. Andererseits soll eine laufende automatische Überwachung und Nachführung der Einstellungen des Kopiergeräts (und damit der beiden Modelle) möglich sein.

Diese Aufgabe wird durch ein Verfahren, wie es im unabhängigen Patentanspruch skizziert ist, gelöst. Zu diesem Zweck werden die entwickelten Kopien (Papierbilder) bereichsweise, vorzugsweise punktweise, abgetastet. Dies kann zwar auch mit Hilfe von Test-Negativbildfeldern erfolgen, erfolgt aber vorzugsweise während der Produktion (d.h. es werden keine Test-Negative verwendet, sondern zu kopierende Negativbildfelder). Das von jedem Abtastbereich des Kopiermaterials (Fotopapier) transmittierte oder remittierte Messlicht wird einer Detektoranordnung zugeführt, spektral zerlegt und in wellenlängen- und intensitätsabhängige elektrische Messignale umgesetzt. Diese elektrischen Messignale werden digitalisiert und mit ihrer Hilfe werden kopiespezifische (papierbildspezifische) Messdaten ermittelt. Aufgrund dieser kopiespezifischen (papierbildspezifischen) Messdaten (und natürlich aufgrund der bekannten Messdaten der zugehörigen Kopiervorlage, also aufgrund der bereits vorhandenen Messdaten des zugehörigen Negativbildfelds, sowie aufgrund der beim Kopieren verwendeten Belichtungswerte) wird das dem Kopiermaterial (Fotopapier) angepasste Modell der Kopiervorlage (papierbezogenes Film-Modell) und das Modell für das Kopiermaterial (Papiermodell) bzw. das dazu inverse Modell (inverses Papiermodell) hinsichtlich vorgebbarer Genauigkeitskriterien überprüft und gegebenenfalls optimiert. Wie bei der Verwendung von Produktionsbildern zur Optimierung der Modelle die Zuordnung der Messpunkte auf dem jeweiligen Papierbild zu den entsprechenden Messpunkten auf dem zugehörigen Negativ auf dem Film erfolgt und wie die unterschiedlichen Filmtypen dabei berücksichtigt werden können, wird weiter unten noch genauer erläutert.

Jedenfalls ist diese Vorgehensweise weniger aufwendig, da keine Test-Negative verwendet werden, und sie ermöglicht eine automatische Überwachung und/oder Nachführung der Einstellung des Kopiergeräts (Papiermodell und papierbezogenes Filmmodell). Dabei sind im Prinzip mehrere Varianten denkbar. Erste Variante: Die Daten können während des Betriebs gesammelt werden (z.B. mit "gleitendem Fenster": alte Daten werden vergessen), und eine Neuoptimierung wird nur auf Wunsch des Bedienungspersonals durchgeführt. Zweite Variante: Die Daten werden während des Betriebs gesammelt, und eine Neuoptimierung erfolgt bei jedem Aufstarten der Kopiergeräts. Dritte Variante: Die Nachführung bzw. Optimierung erfolgt kontinuierlich währenddem die Daten anfallen (für das Bedienungspersonal unsichtbar).

In einer Ausführungsvariante des erfindungsgemässen Verfahrens wird sowohl das dem Kopiermaterial angepasste Modell für die Kopiervorlage (papierbezogenes Film-Modell) als auch das Modell für das Kopiermaterial (Papiermodell) bzw. das dazu inverse Modell (inverses Papiermodell) aufgrund der kopiespezifischen (papierbildspezifischen) Messdaten und natürlich aufgrund der vorlagenspezifischen (bildfeldspezifischen) Messdaten, die ja aufgrund der spektralen Messung der Kopiervorlage (Negativfilm) vorliegen, so lange iterativ optimiert, bis der mittlere quadratische Fehler als Genauigkeitskriterium für das jeweilige Modell minimiert ist oder einen vorgebbaren Schwellenwert unterschreitet. Die iterative Optimierung des jeweiligen Modells erfolgt derart, dass das jeweils andere Modell nicht verändert wird.

Eine spezielle Ausführungsvariante zeichnet sich dadurch aus, dass die aus der spektralen Messung der Kopiervorlage resultierenden und anschliessend digitalisierten Messignale einer umkehrbaren vorzugsweise orthogonalen Transformation bzw. Datenkompression, vorzugsweise der Karhunen-Loève-Transformation, unterzogen werden, und dass die aus dieser Transformation hervorgehenden Transformationskoeffizienten die Messdaten für die jeweilige Kopiervorlage bilden und als Eingangsgrösse für das dem Kopiermaterial angepasste Modell der Kopiervorlage verwendet werden (siehe z.B. EP-A-0,475,897). Bei dieser Ausführungsvariante kann es sich auch um eine Weiterbildung der zuvor genannten Ausführungsvariante handeln. Vom Prinzip her eignen sich als Eingangsgrösse für das dem Kopiermaterial angepasste Modell der Kopiervorlage aber auch die Dichten in den Grundfarben Rot, Grün und Blau, wie sie z.B. mit Hilfe von konventionellen Scannern ermittelt werden.

Bei einer Weiterbildung der beiden zuvor genannten Ausführungsvarianten wird zunächst ein Anfangswert für das papierbezogenes Film-Modell bestimmt. Dann wird aufgrund der kopiespezifischen (papierbildspezifischen) Messdaten und der beim Kopieren verwendeten Belichtungswerte sowie aufgrund der vorlagenspezifischen Messdaten das Modell für das Kopiermaterial (Papiermodell) bzw. das dazu inverse Modell (inverses Papiermodell) so lange optimiert, bis der mittlere quadratische Fehler minimiert ist oder den vorgebbaren Schwellenwert unterschreitet, und anschliessend wird bei optimiertem Papiermodell bzw. bei optimiertem inversen Papiermodell das papierbezogene Film-Modell aufgrund der kopiespezifischen (papierbildspezifischen) Messdaten und der verwendeten Belichtungswerte sowie aufgrund der vorlagenspezifischen Messdaten so lange aktualisiert, bis der mittlere quadratische Fehler minimiert ist oder den vorgebbaren Schwellenwert unterschreitet.

Im folgenden wird die Erfindung mit Hilfe der Zeichnung näher erläutert. Dabei zeigen in schematischer Darstellung:

Fig. 1 eine Anordnung der wesentlichen Teile eines fotografischen Kopiergeräts mit einer nachgeschalteten Entwicklungsstation zum Entwickeln des belichteten Fotopapiers,

Fig. 2 einen Gesamtüberblick zur Veranschaulichung des Zusammenwirkens von papierbezogenem Film-Modell und Papiermodell,

Fig. 3 die Vorgehensweise bei der Optimierung des papierbezogenen Film-Modells,

Fig. 4 die Vorgehensweise bei der Optimierung des Papiermodells bzw. des inversen Papiermodells,

Fig. 5 eine detailliertere Darstellung eines Papiermodells

Fig. 6 eine detailliertere Darstellung eines Inversen Papiermodells

Fig. 7 eine gesamthafte Darstellung der Vorgehensweise bei der Optimierung beider Modelle, und

Fig. 8 eine Darstellung einer Kopiervorlage und einer davon erstellten Kopie, zur Erläuterung der Vorgehensweise bei der Optimierung der Modelle unter Verwendung von Produktionskopien.

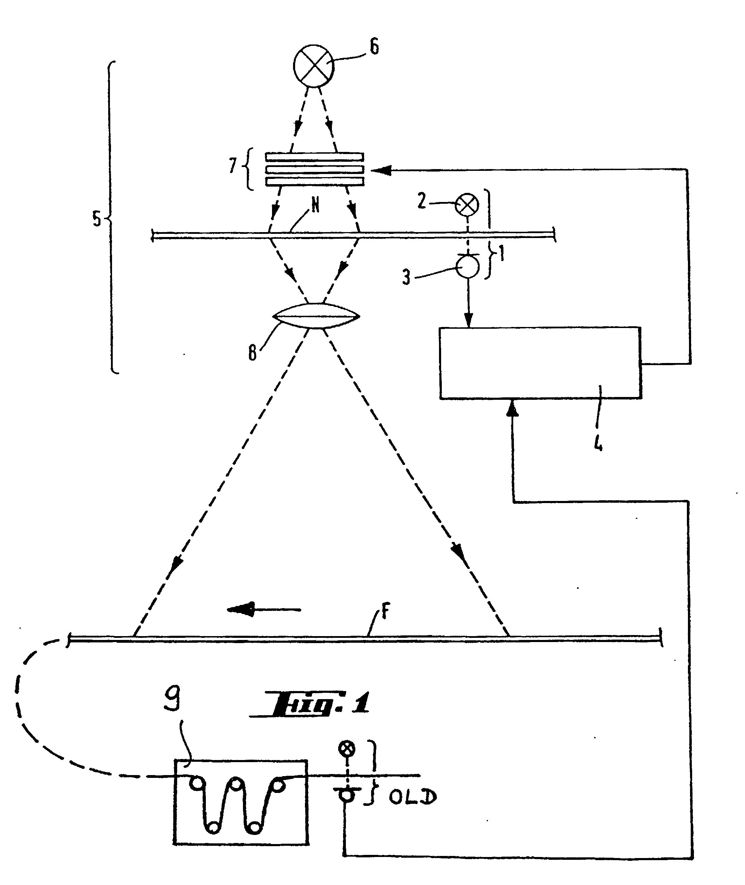

Die in Fig. 1 dargestellte Anordnung der wesentlichen Teile eines fotografischen Kopiergeräts mit nachgeschaltetem Papierprozessor 9 umfasst im wesentlichen eine Messstation 1, in welcher mittels einer Messlichtquelle 2 und einer Detektoranordnung 3 eine Kopiervorlage, z.B. ein Negativfilm N, bereichsweise, vorzugsweise punktweise, abgetastet wird. Das durch den Negativfilm N, der im folgenden stets repräsentativ für eine Kopiervorlage zu betrachten ist, transmittierte Licht wird von der Detektoranordnung 3 spektral zerlegt und in wellenlängen- und intensitätsabhängige elektrische Messignale umgesetzt. Anschliessend werden diese elektrischen Messignale digitalisiert und in Messdaten umgewandelt, die für das jeweilige Negativ spezifisch sind. Diese Digitalisierung und Umwandlung kann sowohl in der Detektoranordnung 3 als auch in der nachgeschalteten Rechen- und Steuereinheit 4 erfolgen. Aufgrund dieser Messdaten werden von der Rechen- und Steuereinheit 4 die zum Aufkopieren dieses Negativs auf Kopiermaterial erforderlichen Kopierlichtmengen ermittelt. Sind die erforderlichen Kopierlichtmengen einmal bestimmt, werden von der Rechen- und Steuereinheit 4 entsprechende Steuersignale erzeugt, die zur Steuerung von in der nachfolgenden Kopierstation 5 vorgesehenen Farbverschlüssen 7 dienen (selbstverständlich kommen auch andere bekannte Verfahren zur Steuerung der Belichtung in den drei Farben in Frage). In dieser Kopierstation 5 erfolgt das eigentliche Aufkopieren des jeweiligen Negativs auf das Kopiermaterial, welches hier repräsentativ durch Fotopapier F dargestellt ist. Das Aufkopieren der Negative auf Fotopapier erfolgt in diesem Beispiel derart, dass die Farbverschlüsse 7 entsprechend den in der Rechen- und Steuereinheit erzeugten Steuersignalen in den Strahlengang der Kopierlichtquelle 6 eingeschwenkt werden. Mittels einer Abbildungsoptik 8 wird dann das entsprechende Negativ auf das Fotopapier F abgebildet. Das belichtete Fotopapier muss nun noch entwickelt werden, was in einem Papierprozessor 9 erfolgt. Dieser Papierprozessor kann Bestandteil einer kompletten fotografischen Verarbeitungsstrecke sein, kann aber auch ein selbständiges Gerät sein. Soweit entspricht die in Fig. 1 dargestellte Anordnung dem Stand der Technik, wie er in zahlreichen Druckschriften beschrieben ist.

Während nun aber die Anordnung gemäss Fig. 1 - üblicherweise ein Kopiergerät - wie bereits beschrieben vor dem Beginn der Produktion eingetestet - kalibriert - werden muss, d.h. also während die einstellbaren Parameter des Kopiergerät z.B. nach einer subjektiven Beurteilung von entwickelten Papierbildern, die von Testnegativen erstellt worden sind, durch das Bedienungspersonal eingestellt werden, erfolgt das Eintesten - das Kalibrieren - (das Optimieren der Modelle) gemäss der Erfindung vollautomatisch dadurch, dass die entwickelten Papierbilder "on-line" am Ausgang des Papierprozessors 9 ausgemessen werden; die Messdaten werden dazu verwendet, die Parameter der einzelnen Modelle - die entsprechenden Messdaten der zugehörigen Negative kennt man ja noch von der Ausmessung der Negative - zu optimieren (wird weiter unten noch genauer erläutert). Somit ist es nicht nur möglich, subjektive Einflüsse beim Eintesten (Kalibrieren) auszuschliessen, es ist ausserdem auch möglich, während der Produktion - entweder stichprobenweise oder kontinuierlich - automatisch charakteristische Bereiche der Papierbilder auszumessen und die einzelnen Modelle quasi "on-line", also während der Produktion, zu überprüfen bzw. zu optimieren. Hierzu werden am Ausgang des Papierprozessors 9 mit Hilfe eines "on-line Densitometers" OLD (bei der Ausmessung des Fotopapiers handelt es sich um Remissionsmessungen) die entwickelten Papierbilder auf dem Fotopapier bereichsweise, vorzugsweise punktweise, abgetastet. Das von jedem Abtastbereich des Fotopapiers remittierte Messlicht (bei lichttransparentem Kopiermaterial sind auch Transmissionsmessungen möglich) wird einer Detektoranordnung zugeführt, spektral zerlegt und in wellenlängen- und intensitätsabhängige elektrische Messsignale umgesetzt, ähnlich wie bei der Ausmessung der Negative. Diese elektrischen Messsignale werden digitalisiert und mit ihrer Hilfe werden kopiespezifische Messdaten ermittelt. Aufgrund dieser kopiespezifischen Messdaten wird das dem Kopiermaterial angepasste Modell der Kopiervorlage und das Modell für das Kopiermaterial bzw. das dazu inverse Modell hinsichtlich vorgebbarer Genauigkeitskriterien überprüft und gegebenenfalls aktualisiert. Ein Beispiel für solche Genauigkeitskriterien und für die einzelnen Modelle wird im folgenden etwas näher betrachtet.

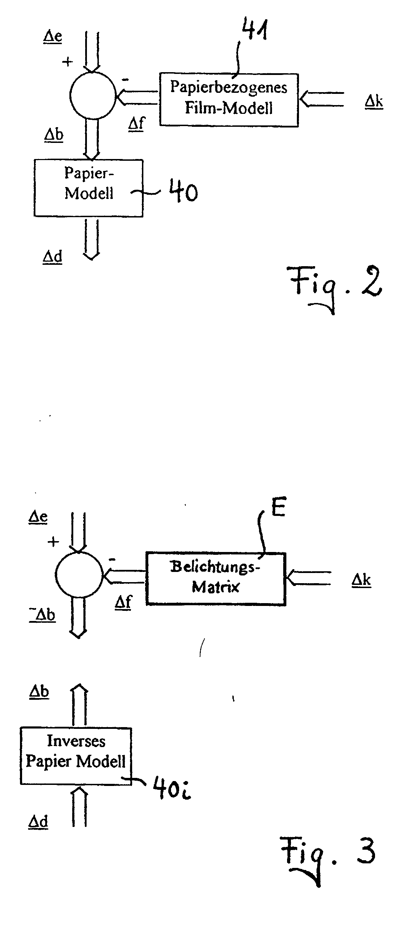

Hierzu ist in Fig. 2 dargestellt, wie das gesamte Belichtungssystem modelliert wird. Dazu bedient man sich eines Gesamtmodells, welches selbst zwei Modelle umfasst, nämlich ein Papiermodell 40 und ein papierbezogenes Film-Modell 41. Das Papiermodell 40 gibt im wesentlichen wieder, wie sich die Papierdichte (über die Konzentration der Farbstoffe Gelb, Magenta, Cyan) ändert in Abhängigkeit von einer Änderung des Kopierlichts in den drei Farben Blau, Grün, Rot. Das Papiermodell ist also repräsentativ für die Absorptionseigenschaften des Fotopapiers bei Änderung der Belichtung (das Papiermodell berücksichtigt also insbesondere auch Nebenabsorptionen des Fotopapiers; wenn das Fotopapier mit blauem Licht beaufschlagt wird, hat dies eine Veränderung der optischen Dichte in allen drei Farben zur Folge). Das papierbezogene Film-Modell 41 gibt hingegen wieder, wie das Fotopapier auf Änderungen der spektralen Filmdichte (bei unverändertem Kopierlicht) reagiert, und gibt somit auch an, wie das Kopierlicht geändert werden muss, um Abweichungen der tatsächlich gemessenen Dichte eines Negativs von der durchschnittlichen Filmdichte kompensieren zu können. Hierzu muss der Film aber "mit den Augen des Fotopapiers" gesehen werden, daher spricht man von einem papierbezogenen Film-Modell.

Zum besseren Verständnis der Grössen in Fig. 2 sei angemerkt, dass das Kopierlicht generell durch seine Blau-, Grün- und Rotanteile charakterisiert werden kann, welche in einem Vektor

$$\underline{e} = \underline{e}_0 + \underline{\Delta e} = \begin{pmatrix} e_B \\ e_G \\ e_R \end{pmatrix};$$

(B,G,R = Blau, Grün, Rot)
wiedergegeben sind.

Dabei steht $\underline{e}$ für den jeweiligen Kopierlichtvektor, der sich zusammensetzt aus einem Kopierlichtvektor $\underline{e}_0$, das ist ein Kopierlichtvektor, mit dem ein Negativ mit durchschnittlicher Dichte korrekt auf das Fotopapier aufkopiert wird, und einem Kopierlichtvektor $\underline{\Delta e}$, der die Abweichungen von dem durchschnittlichen Kopierlichtvektor $\underline{e}_0$ repräsentiert.

Das durchschnittliche Negativ "korrekt" aufzukopieren bedeutet, dass das Fotopapier nach dem Aufkopieren die Referenzichte $\underline{d}_0$ aufweist, welche beim Kopieren eines durchschnittlichen Negativs erzielt werden soll.

Die Papierdichtewerte werden generell ebenfalls durch einen entsprechenden Dichtevektor

$$\underline{d} = \underline{d}_0 + \underline{\Delta d} = \begin{pmatrix} d_Y \\ d_M \\ d_C \end{pmatrix}$$

(Y,M,C = Yellow, Magenta,Cyan)
charakterisiert, wobei der Vektor $\underline{\Delta d}$ für die Abweichungen der tatsächlichen Papierdichte von der angestrebten Papierdichte $\underline{d}_0$ steht.

Wird ein Negativfilm in den Belichtungsstrahlengang (Kopierlicht) eingebracht, so reduziert sich die effektive Belichtung für die drei Farbschichten des Fotopapiers. Diese Belichtungsreduktion wird vektoriell beschrieben durch

$$\underline{b} = \underline{e} - \underline{f} \, ,$$

wobei der Vektor $\underline{f}$ für die Dichte des Negativs steht und sich ergibt aus

$$\underline{f} = \underline{f}_0 + \underline{\Delta f} = \begin{pmatrix} f_B \\ f_G \\ f_R \end{pmatrix},$$

(B,G,R = Blau, Grün,Rot).

Dabei steht $\underline{f}_0$ für den Dichtevektor eines durchschnittlichen Negativs und der Vektor $\underline{\Delta f}$ für Abweichungen von dieser durchschnittlichen Dichte. Ausgehend von dem Grundzustand (Kopierlichtvektor $\underline{e}_0$ und, Negativ der Filmdichte $\underline{f}_0$; Ergebnis: Papierdichte $\underline{d}_0$) ist es mit Hilfe des in Fig. 2 dargestellten Gesamtmodells möglich, den Einfluss von Änderungen des Kopierlichts (Vektor $\underline{\Delta e}$) und der Filmdichte (Vektor $\underline{\Delta f}$) auf die Papierdichte (Vektor $\underline{\Delta d}$) vorauszusagen. Diese Voraussage (und die Voraussage der gegebenenfalls erforderlichen Korrektur) wird natürlich umso besser, je besser die einzelnen Modelle (Papiermodell, Papierbezogenes Film-Modell) die tatsächlichen Verhältnisse wiedergeben.

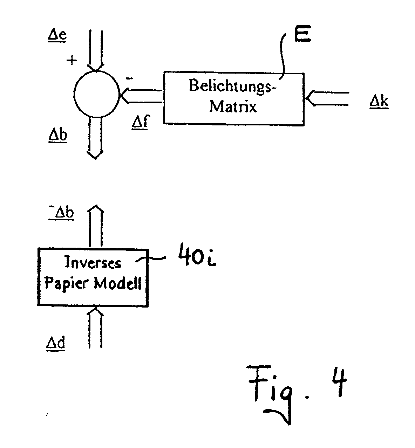

Anhand von Fig. 3 soll zunächst generell das papierbezogene Film-Modell ein wenig näher betrachtet werden, aber auch die Vorgehensweise bei der Optimierung des papierbezogenen Film-Modells soll genauer betrachtet werden. Das papierbezogene Film-Modell 41 aus Fig. 2 ist in Fig. 3 durch eine Belichtungsmatrix E realisiert. Eine solche Belichtungsmatrix E ist bekanntermassen (z.B. aus EP-A-0,475,897) eine hinreichend genaue Realisierung des papierbezogenen Film-Modells. Um allerdings verstehen zu können, wie man zu dem Eingangsvektor $\underline{\Delta k}$ gelangt, mit dem die Belichtungsmatrix E verknüpft wird, sind noch einige Vorbetrachtungen erforderlich. Bei der punktweisen Abtastung des Negativs in der Messstation 1 (Fig. 1 ) werden nämlich zunächst von jedem Messpunkt spektrale Transmissionen (oder bei Remissionsmessung spektrale Remissionen) bestimmt. Hierzu wird das von der Messlichtquelle 2 ausgesandte und durch den Messpunkt des Negativs transmittierte Licht von dem jeweiligen Detektor der Detektoranordnung 3 in ein entsprechendes elektrisches Messignal umgesetzt, welches der Transmission des Negativs bei einer bestimmten Wellenlänge entspricht. Diese Transmissionswerte werden durch Logarithmieren zu spektrale Dichtewerten umgeformt und mit einer entsprechenden Referenzdichte z.B. einer neutral grauen Norm-Kopiervorlage verglichen. Diese spektralen Dichtedifferenzen werden nun einer Transformation unterworfen, vorzugsweise der Karhunen-Loève-Transformation. Von den Transformationskoeffizienten werden nach bestimmten Kriterien (siehe z.B. EP-A-0,475,897) eine Anzahl Transformationskoeffizienten, vorzugsweise sieben Tranformationskoeffizienten, ausgewählt, die mit hoher Genauigkeit repräsentativ für die spektrale Dichteverteilung der Kopiervorlage sind. Diese sieben Transformationskoeffizienten werden in einem Vektor $\underline{\Delta k}$ dargestellt und bilden bei der Darstellung in Fig. 3 die Eingangsgrösse, die mit der Belichtungsmatrix nach der Gleichung

$$\underline{\Delta f} = E \; \underline{\Delta k} \qquad (E = \text{Belichtungsmatrix})$$

verknüpft wird, um den jeweiligen Filmdichtevektor $\underline{\Delta f}$ zu erhalten, der ein Mass für die Abweichung der Dichte des jeweiligen Negativs des Films von der durchschnittlichen Filmdichte $\underline{f}_0$ ist. Es ist klar, dass im Falle von sieben Transformationskoeffizienten des Vektors $\underline{\Delta k}$ die Matrix E eine 3x7-Matrix ist, wenn der Vektor $\underline{\Delta f}$ drei Komponenten - wie oben beschrieben - umfasst.

Vom Prinzip her können aber genauso die Dichten der Kopiervorlage in den drei Grundfarben Rot, Grün, Blau als Eingangsgrösse verwendet werden, die mit der Belichtungsmatrix E nach der obengenannten Gleichung verknüpft werden. Die Belichtungsmatrix E ist für diesen Fall eine 3x3-Matrix.

Bei der Optimierung der Belichtungsmatrix E wird von einem bekannten Papiermodell 40 (z.B. das jeweilige aktuelle Papiermodell) ausgegangen. Ist das Papiermodell 40 bekannt (üblicherweise in Form einer - invertierbaren - Papiermatrix, sofern ein lineares Modell ausreichend genau ist), so lässt sich auch das "Inverse Papiermodell" 40i (dann ebenfalls eine Matrix) ermitteln. Nun werden entweder eine Anzahl N homogener, jedoch unterschiedlich belichteter Testnegative, die demzufolge jeweils unterschiedliche Karhunen- Loève-Transformationsvektoren $\underline{\Delta k}_N$ (nachfolgend KL-Transformationsvektoren genannt) aufweisen, mit vorgegebenen Kopierlichtabweichungen $\underline{\Delta e}_N$ auf das Fotopapier aufkopiert, und es werden die Dichteabweichungen $\underline{\Delta d}_N$ der Papierbilder mit Hilfe des "on-line Densitometers" OLD gemessen, oder aber man verwendet direkt Produktionsnegative (also zu kopierende Negative) für diese Optimierung.

Verwendet man Testnegative, so wählt man sinnvollerweise die Kopierlichtabweichungen $\underline{\Delta e}_N$ so, dass näherungsweise identisch graue Kopien erzeugt werden. Verwendet man hingegen Produktionsnegative, so kann beispielsweise so vorgegangen werden, wie es mit Hilfe von Fig. 8 nachfolgend erläutert wird. Hierzu sind in Fig. 8 ein Negativ eines Negativfilmstreifens N und eine davon auf Fotopapier F erstellte Kopie dargestellt. Auf dem Negativ sind die einzelnen Negativ-Messpunkte N-MP angedeutet (in Realität ist die Auflösung viel feiner, würde aber zu zeichnerischen Problemen führen), und auf der davon auf dem Fotopapier F erstellten Kopie die Abbildungen F-MP der Negativ-Messpunkte. Ferner ist eine Messspur OLD-MS des on-line Densitometers OLD (Fig. 1) dargestellt (die dargestellte Messspur OLD-MS verläuft gerade längsmittig, man könnte aber ebensogut eine andere Messspur wählen), sowie einige Messpunkte OLD-MP längs dieser Messspur OLD-MS. In einem Kopiergerät ist die Auflösung der Messpunkte auf dem Negativ, auf dem Papierbild, sowie die beim Kopieren verwendete Vergrösserung bekannt. Ferner ist auch bekannt, welcher Punkt des Negativs auf das Zentrum des Papierbilds abgebildet wird . Damit ist eine eindeutige Zuordnung möglich und es können zu jedem Messpunkt OLD-MP auf dem Papierbild eine Anzahl (z.B. vier) Messpunkte N-MP auf dem Negativ ermittelt werden, die dem berechneten Messpunkt am nächsten liegen. Betrachtet man als Beispiel den Messpunkt OLD-MP am linken Rand des Papierbilds, so sind die in Betracht kommenden vier Messpunkte N-MP auf dem Negativ diejenigen, die - von links her betrachtet - den beiden ersten Abbildungen F-MP in der jeweils ersten Zeile oberhalb und unterhalb der Messspur OLD-MS des on-line Densitometers OLD (Fig. 1) auf dem Negativ entsprechen. Die jeweiligen Messdaten (Filmdichte, Papierdichte, Kopierlicht sowie der zugehörige Filmtyp) werden für die spätere Auswertung abgespeichert. Bevor nun eine Reihe von Messdaten ausgewertet wird, wird geprüft, ob die Reihe von Daten von mehr als einer minimalen Anzahl verschiedener Filmtypen (also z.B. von mehr als zehn verschiedenen Filmtypen) stammt. Ausserdem wird auch geprüft, ob auch der von den Messdaten umfasste Bereich in Farbe und Dichte sowohl für die Filmdichten (für die Ermittlung des papierbezogenen Film-Modells) als auch für die Papierdichten (für die Ermittlung des Papiermodells) genügend gross ist. Sind einzelne Filmtypen von ihrer Anzahl her in der Reihe von Daten zu viel vertreten, so werden von diesem Filmtyp nur ein Teil der Messdaten für die Auswertung verwendet.

Um nun mit der Modelloptimierung beginnen zu können, müssen zumindest für eines der Modelle Näherungswerte für die Parameter des Modells bekannt sein. Für die Belichtungsmatrix E lässt sich ein guter Näherungswert wie folgt bestimmen. Man geht davon aus, dass sich die spektralen Empfindlichkeiten des Fotopapiers auf drei diskrete Wellenlängen konzentrieren, nämlich beispielsweise $\lambda_B \approx 470$ nm, $\lambda_G \approx 550$ nm und $\lambda_R \approx 690$ nm. Die drei Komponenten des Filmdichtevektors $\underline{f}$ entsprechen mit dieser Annahme gerade den Werten der spektralen Filmdichte, die bei genau diesen Wellenlängen gemessen worden sind. Andererseits lassen sich die spektralen Filmdichten aus dem KL-Transformationsvektor $\underline{\Delta k}$ (der nicht nur aus den spektralen Filmdichtewerten bei genau den genannten drei Wellenlängen bestimmt worden ist, sondern auch aus den spektralen Filmdichtewerten bei den anderen Wellenlängen) unter Anwendung der Inversen Karhunen-Loève-Transformation mit sehr guter Näherung direkt berechnen. Damit ist über die obengenannte Gleichung

$$\underline{\Delta f} = E \, \underline{\Delta k}$$

auch ein erster Näherungswert für die Belichtungsmatrix E bekannt.

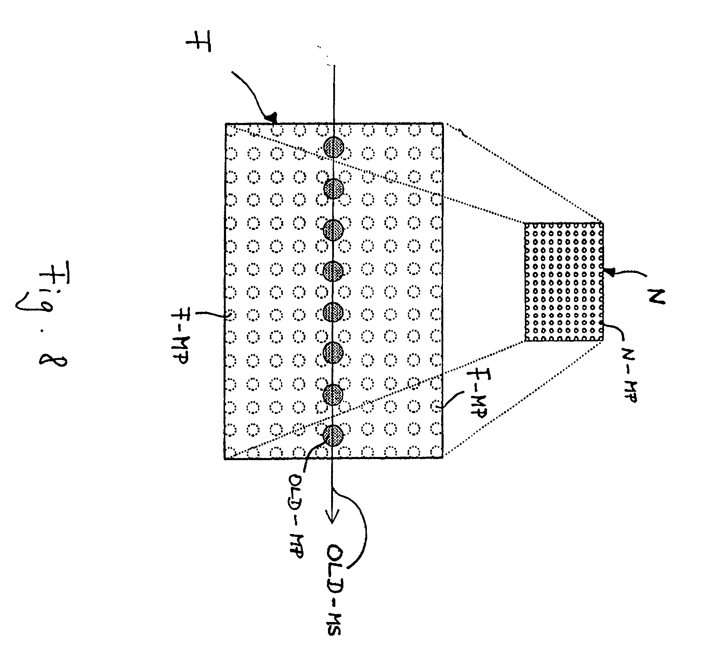

Falls also für die Modelle keine Anfangswerte vorhanden sind, führt das Verfahren trotzdem zum Erfolg, wenn man so vorgeht wie es in Fig. 7 dargestellt ist. Gemäss dem dort dargestellten Ablaufschema für die Optimierung des Gesamtmodells wird zunächst in einem ersten Schritt S1 ein Anfangswert für die Belichtungsmatrix E bestimmt. Dies kann derart erfolgen, wie dies weiter oben beschrieben ist (man geht davon aus, dass die spektralen Papierempfindlichkeiten sich auf drei diskrete Wellenlängen konzentrieren, etc.). Dann wird in einem zweiten Schritt S2 das Inverse Papiermodell unter Verwendung der aktuellen Belichtungsmatrix (zu Beginn ist dies der Anfangswert für die Belichtungsmatrix) optimiert, wie oben detailliert beschrieben. Dabei bleibt die Belichtungsmatrix unverändert. Ist das Inverse Papiermodell optimiert, wird in einem Schritt S3 die Belichtungsmatrix optimiert. Dabei wird das aktuelle (also das zuvor im Schritt S2 optimierte) Inverse Papiermodell verwendet und dieses bleibt bei der Optimierung der Belichtungsmatrix unverändert. Anschliessend wird in einem Schritt S4 überprüft, ob vorgegebene Fehler $E_F$ und $E_P$ klein genug sind, also einen Schwellenwert unterschreiten (ob also die vorgebbaren Anforderungen an die Genauigkeit der Modelle erfüllt sind). Sofern dies nicht der Fall ist, wird die zuvor im Schritt S3 optimierte Belichtungsmatrix verwendet und das Inverse Papiermodell erneut optimiert, etc.. Diese Schleife wird so lange durchlaufen, bis die Modelle den Genauigkeitsanforderungen genügen (bis also die Fehler $E_F$ und $E_P$ klein genug sind) oder bis eine weitere Iteration keine Verbesserung mehr bringt.

Die Optimierung der Belichtungsmatrix gemäss Fig. 3 erfolgt nun in Kenntnis des inversen Papiermodells, welches bei der Optimierung der Belichtungsmatrix nicht verändert wird, wie folgt: Zunächst werden die Papierdichten $\underline{\Delta d_N}$ der auf Fotopapier aufkopierten Bilder der N homogenen Test-Negative (für den Fall, dass homogene Test-Negative verwendet werden) bzw. die Papierdichten der aufkopierten Bilder in den ausgewählten Messpunkten mit Hilfe des Densitometers OLD gemessen. Mit Hilfe des inversen Papiermodells 40i werden dann die Belichtungsabweichungen $\underline{\Delta b_N}$ bestimmt, die die Änderungen der Papierdichte bewirkt haben. Der Vektor $\underline{\Delta k_N}$ des jeweiligen Test-Negativs bzw. des Produktionsnegativs ist aus der spektralen Ausmessung des Negativs bekannt bzw. wird daraus ermittelt. Der Vektor $\underline{\Delta e}_N$ für das Kopierlicht, welches beim Aufkopieren des jeweiligen Test-Negativs bzw. Produktionsnegativs verwendet worden ist, ist ebenfalls bekannt. Nun wird mittels eines mathematischen Optimierungsverfahrens die Matrix E berechnet, für welche der Fehler

$$E_F = \frac{1}{N} \Sigma \left| \underline{\Delta b}_N - \tilde{\underline{\Delta b}}_N \right|^2 = \frac{1}{N} \Sigma \left| \underline{\Delta b}_N + \underline{\Delta e}_N - E \underline{\Delta k}_N \right|^2$$

minimal wird. Da es sich bei dem papierbezogenen Filmmodell um ein lineares Modell handelt, kann als Optimierungsverfahren das Verfahren, das als "Multilineare Regression" bekannt ist, verwendet werden.

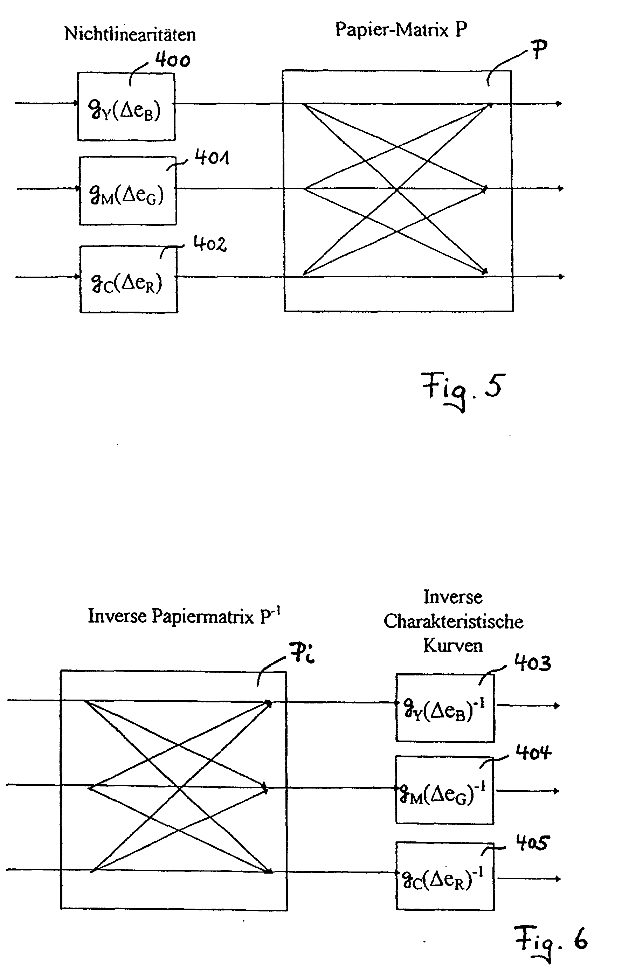

Für viele Anwendungen genügt auch für das Papiermodell 40 (Fig. 2) ein linearer Ansatz. In solchen Fällen kann das Papiermodell 40 durch eine entsprechende Papiermatrix wiedergegeben werden. Der Gültigkeitsbereich eines solchen linearen Modells beschränkt sich jedoch auf eine bestimmte Umgebung um den Arbeitspunkt auf der charakteristischen Kurve für den jeweiligen Farbstoff. Ein genaueres Modell berücksichtigt hingegen auch die Nichtlinearität der charakteristischen Kurven. Bevor nun auf die Optimierung des Papiermodells 40 bzw. auf die Optimierung des inversen Papiermodells 40i anhand von Fig. 4 eingegangen wird, soll zunächst die Nichtlinearität der charakteristischen Kurven ein wenig genauer betrachtet werden.

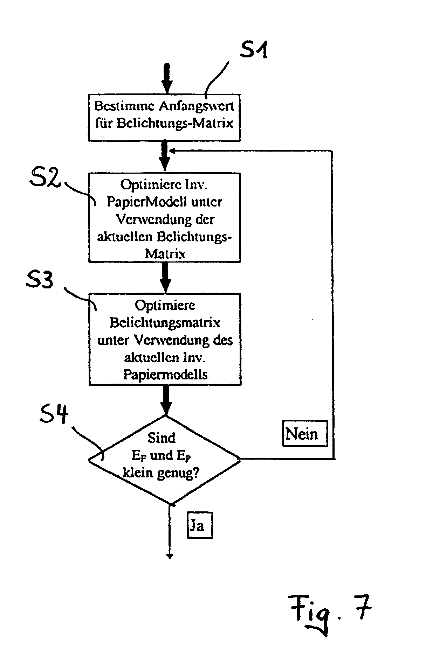

Hierzu ist in Fig. 5 das Fotopapier derart modelliert, dass zunächst drei Kanäle 400,401,402 vorgesehen sind, die die nichtlineare Konzentrationsänderung der Farbstoffe Yellow (Y), Magenta (M) und Cyan (C) in Abhängigkeit von der jeweiligen Belichtungsänderung in Blau ($\Delta e_B$), in Grün ($\Delta e_G$) und in Rot ($\Delta e_R$) wiedergeben, und zwar in Form von Abhängigkeiten $g_Y(\Delta e_B)$, $g_M(\Delta e_G)$ und $g_C(\Delta e_R)$. Daran anschliessend ist ein lineares Modell - eine Papiermatrix P - vorgesehen, welches die Tatsache berücksichtigt, dass bei einer Belichtungsänderung z.B. nur des blauen Lichts Änderungen der optischen Dichte in allen drei Farben hervorgerufen werden. Tatsächlich wird aber nicht das Papiermodell optimiert, sondern das Inverse Papiermodell, wie es in Fig. 6 dargestellt ist. Die - ebenfalls nichtlinearen - inversen charakteristischen Kurven, die in den Kanälen 403,404,405 durch $g_Y(\Delta e_B)^{-1}$, $g_M(\Delta e_G)^{-1}$ und $g_C(\Delta e_R)^{-1}$ dargestellt sind, können beispielsweise als Potenzreihen dargestellt werden. Die Koeffizienten dieser Potenzreihen stellen dann, zusammen mit den Koeffizienten der Inversen Papiermatrix Pi, die zu optimierenden Parameter des Modells dar. Allerdings handelt es sich hier - im Unterschied zu dem papierbezogenen Film-Modell (der Belichtungsmatrix) - insgesamt um ein nichtlineares Modell. Die Optimierung dieses Inversen Papiermodells 40i (Fig. 4) kann nun ablaufen wie folgt.

Es werden eine Anzahl N homogener, aber unterschiedlich belichteter Test-Negative, oder aber auch Produktionsnegative, mit KL-Tranformationsvektoren $\underline{\Delta k}_N$ mit vorgegebenen Kopierlichtabweichungen $\underline{\Delta e}_N$ kopiert und die resultierenden Dichteabweichungen $\underline{\Delta d}_N$ der zugehörigen Papierbilder (Kopien) mit Hilfe des on-line Densitometers OLD (Fig. 1) gemessen. Vom Prinzip her ist es - sofern man Test-Negative verwendet - auch möglich, nur ein einziges Test-Negativ zu verwenden und mit unterschiedlichen Kopierlichtabweichungen $\underline{\Delta e}_N$ zu beaufschlagen. Statt eines Negativs kann auch ein Farbfilter verwendet werden, dessen spektrale Dichte in etwa einem normalen Negativ entspricht. Die Kopierlichtabweichungen $\underline{\Delta e}_N$ wählt man so, dass die resultierenden Papierdichteabweichungen $\underline{\Delta d}_N$ den gesamten Bereich, in welchem das Modell gültig sein soll, abdecken. Die Belichtungsmatrix E bleibt bei der Optimierung des Inversen Papiermodells unverändert. Aus der Kenntnis der KL-Vektoren $\underline{\Delta k}_N$, der Belichtungsmatrix E und der verwendeten Kopierlichtabweichungen $\underline{\Delta e}_N$ lassen sich die Belichtungsabweichungen $\underline{\Delta b}_N$ bestimmen, welche die gemessenen Papierdichteabweichungen $\underline{\Delta d}_N$ verursacht haben. Mittels eines mathematischen Optimierungsverfahrens werden nun die Parameter des Inversen Papiermodells bestimmt, für welche der Fehler

$$E_P = \frac{1}{N} \Sigma \left| \tilde{\underline{\Delta b}}_N - \underline{\Delta b}_N \right|^2 = \frac{1}{N} \Sigma \left| \tilde{\underline{\Delta b}}_N - \underline{\Delta e}_N + E \underline{\Delta k}_N \right|^2$$

minimal wird. Da es sich - wie oben bereits erläutert - bei dem Inversen Papiermodell um ein nichtlineares Modell handelt, muss dazu ein iteratives Verfahren zur nichtlinearen Optimierung verwendet werden (siehe z.B. R. Fletcher: "Practical Methods of Optimization", Vol. 1+2, John Wiley & Sons).

Die oben ausgeführte Beschreibung der Optimierungsverfahren für die Belichtungsmatrix, also für das papierbezogene Film-Modell 41, und für das Inverse Papiermodell 40i ist von der Annahme ausgegangen, dass jeweils das andere der beiden Modelle bekannt sei. Zudem wird das jeweils andere Modell bei der Optimierung nicht verändert. Falls nun für die Modelle keine Anfangswerte vorhanden sind, führt das Verfahren trotzdem zum Erfolg, wenn man so vorgeht wie es in Fig. 7 dargestellt und weiter oben bereits beschrieben ist (bei Erreichung von vorgegebenen Genauigkeitskriterien wird die Optimierung abgebrochen bzw. bei keiner weiteren Verbesserung durch die Optimierung wird ebenfalls abgebrochen).

Diese Optimierung der Modelle aufgrund der mit dem on-line Densitometer OLD ausgemessenen Papierbilder hat den Vorteil, dass das Eintesten - das Kalibrieren - des Geräts vollautomatisch und völlig unabhängig von der subjektiven Beurteilung des Bedienungspersonals erfolgen kann, und zwar sowohl mit Hilfe von (homogenen) Test-Negativen wie auch direkt mit Hilfe von Produktionsnegativen, was besonders für die Anwendung im Bereich der Minilabs von Interesse ist. Ausserdem kann auch jederzeit während der laufenden Produktion eine Überwachung bzw. Überprüfung der Modelle anhand von charakteristischen Bereichen der (Produktions-)Negative und der zugehörigen (Produktions-)Papierbilder erfolgen. Vorzugsweise können mit Hilfe dieser Messdaten die Modelle auch on-line, also während des Produktionsprozesses, aktualisiert (nachgeführt) werden.

**Patentansprüche**

1. Verfahren zur Kalibrierung eines fotografischen Kopiergeräts mit den folgenden Verfahrensschritten:

   a) die Kopiervorlage wird in einer Messstation (1) des Kopiergeräts bereichsweise, vorzugsweise punktweise, abgetastet;

   b) das von jedem Abtastbereich der Kopiervorlage transmittierte oder remittierte Messlicht wird einer Detektoranordnung (2) zugeführt, spektral zerlegt und in wellenlängen- und intensitätsabhängige elektrische Messsignale umgesetzt;

   c) die elektrischen Messsignale werden digitalisiert und mit ihrer Hilfe werden vorlagenspezifische Messdaten ermittelt,

   d) aufgrund der ermittelten Messdaten werden mit Hilfe eines dem Kopiermaterial angepassten Modells (41,E) für die Kopiervorlage (N), welches repräsentativ für das Verhalten des Kopiermaterials (F) bei Änderungen der spektralen Zusammensetzung der Kopiervorlage (N) ist, und mit Hilfe eines Modells (40,P) für das Kopiermaterial, welches repräsentativ für die Absorptionseigenschaften des Kopiermaterials (F) bei Änderungen der Belichtung ist, bzw. mittels eines dazu inversen Modells (Pi) die für die Aufbelichtung erforderlichen Kopierlichtmengen ermittelt,

   e) aufgrund der emittelten Kopierlichtmengen werden Steuersignale für in der Kopierstation des Kopiergeräts vorgesehene Farbfilter und Verschlüsse (7) ermittelt, welche nach Massgabe der Steuersignale beim Aufkopieren der Kopiervorlage (N) auf das Kopiermaterial (F) in den Kopierstrahlengang eingebracht werden,

   f) die auf diese Weise erstellten Kopien werden in einer Entwicklungsstation (9) entwickelt,

   **gekennzeichnet durch** die folgenden Verfahrensschritte:

   g) die entwickelten Kopien werden bereichsweise, vorzugsweise punktweise, abgetastet (OLD);

   h) das von jedem Abtastbereich des Kopiermaterials transmittierte oder remittierte Messlicht wird einer Detektoranordnung zugeführt, spektral zerlegt und in wellenlängen- und intensitätsabhängige elektrische Messsignale umgesetzt;

   i) die elektrischen Messsignale werden digitalisiert und mit ihrer Hilfe werden kopiespezifische Messdaten ermittelt,

   j) aufgrund der kopiespezifischen Messdaten, der vorlagenspezifischen Messdaten sowie der beim Kopieren verwendeten Belichtung wird das dem Kopiermaterial angepasste Modell (41,E) der Kopiervorlage (N) und das Modell (40,P) für das Kopiermaterial (F) bzw. das dazu inverse Modell (Pi) hinsichtlich vorgebbarer Genauigkeitskriterien ($E_F$,$E_P$) überprüft und gegebenenfalls optimiert.

2. Verfahren nach Anspruch 1, **dadurch gekennzeichnet, dass** die Kopien am Ausgang der Entwicklungsstation (9) abgetastet (OLD) werden.

3. Verfahren nach Anspruch 1 oder 2, **dadurch gekennzeichnet, dass** sowohl das dem Kopiermaterial angepasste Modell (41,E) für die Kopiervorlage (N) als auch das Modell (40,P) für das Kopiermaterial bzw. das dazu inverse Modell (Pi) aufgrund der kopiespezifischen Messdaten so lange optimiert wird, bis der mittlere quadratische Fehler ($E_F$,$E_P$) als Genauigkeitskriterium für das jeweilige Modell minimiert ist oder einen vorgebbaren Schwellenwert unterschreitet, wobei die Optimierung des jeweiligen Modells derart erfolgt, dass das jeweils andere Modell bei dieser Optimierung nicht verändert wird.

4. Verfahren nach einem der Ansprüche 1 bis 3, **dadurch gekennzeichnet, dass** die aus der spektralen Messung der Kopiervorlage resultierenden und anschliessend digitalisierten Messignale einer umkehrbaren vorzugsweise orthogonalen Transformation bzw. Datenkompression, vorzugsweise der Karhunen-Loève-Transformation, unterzogen werden, und dass die aus dieser Transformation hervorgehenden Transformationskoeffizienten die Messdaten für die jeweilige Kopiervorlage bilden und als Eingangsgrösse ($\triangle$k) für das dem Kopiermaterial (F) angepasste Modell (41,E) der Kopiervorlage (N) verwendet werden.

5. Verfahren nach einem der Ansprüche 2 bis 4, **dadurch gekennzeichnet, dass** zunächst ein Anfangswert für das dem Kopiermaterial angepasste Modell für die Kopiervorlage (41,E) bestimmt wird, dass dann aufgrund der kopiespezifischen Messdaten, der vorlagenspezifischen Messdaten, sowie aufgrund der beim Kopieren verwendeten Belichtung das Modell (40,P) für das Kopiermaterial (F) bzw. das dazu inverse Modell (Pi) so lange optimiert wird, bis der mittlere quadratische Fehler ($E_P$) minimiert ist oder den vorgebbaren Schwellenwert unterschreitet, und dass anschliessend bei optimiertem Modell (40,P) für das Kopiermaterial bzw. bei optimiertem dazu inversen Modell (Pi) das dem Kopiermaterial (F) angepasste Modell (41,E) für die Kopiervorlage (F) aufgrund der kopiespezifischen Messdaten, der vorlagenspezifischen Messdaten, sowie aufgrund der beim Kopieren verwendeten Belichtung so lange optimiert wird, bis der mittlere quadratische Fehler ($E_F$) minimiert ist oder den vorgebbaren Schwellenwert unterschreitet.

**Claims**

1. A method of calibrating a photographic copying apparatus, having the method steps below:

   a) the master is scanned area-by-area, preferably point-by-point, in a measuring station (1) of the copying apparatus;

   b) the measuring light transmitted or reflected by each scan area of the master is supplied to a detector arrangement (2), subjected to spectral analysis and converted into wave-length and intensity dependent electrical measuring signals;

   c) the electrical measuring signals are digitalized and used to determine master-specific measuring data;

   d) on the basis of the measuring data determined, the quantities of copying light necessary for the exposure are determined with the aid of a model (41, E) for the master (N), said model being adapted to the copying material and being representative of the behaviour of the copying material (F) upon changes in the spectral composition of the master (N), and with the aid of a model (40, P) for the copying material, said model being representative of the absorption properties of the copying material (F) upon changes in the exposure, or by means of a model (Pi) which is the inverse thereof;

   e) on the basis of the quantities of copying light determined, control signals are determined for colour filters and shutters (7) which are provided in the copying station of the copying apparatus and introduced into the copying beam path according to the control signals when the master (N) is copied onto the copying material (F);

   f) the copies created in this manner are developed in a developing station (9);

   **characterized by** the method steps below:

   g) the developed copies are scanned area-by-area, preferably point-by-point (OLD);

   h) the measuring light transmitted or reflected by each scan area of the copying material is supplied to a detector arrangement, subjected to spectral analysis and converted into wave-length and intensity dependent electrical measuring signals;

   i) the electrical measuring signals are digitalized and used to determine copy-specific measuring data;

   j) on the basis of the copy-specific measuring data, the master-specific measuring data and the exposure used during copying, the model (41, E) of the master (N), which is adapted to the copying material, and the model (40, P) for the copying material (F) or the model (Pi) which is the inverse thereof are checked in respect of predeterminable accuracy criteria ($E_F$, $E_P$) and, if necessary, optimized.

2. A method according to Claims 1, **characterized in that** the copies are scanned (OLD) at the output of the developing station (9).

3. A method according to Claim I or 2, **characterized in that** both the model (41, E) for the master (N), which is adapted to the copying material, and the model (40, P) for the copying material or the model (Pi) which is the inverse thereof are optimized on the basis of the copy-specific measuring data until the root-mean-square error ($E_F$, $E_P$) is minimized as the accuracy criterion for the particular model or falls below a predeterminable critical value, the optimization of the particular model being effected such that the other model, in each case, is not changed during this optimization.

4. A method according to one of Claims 1 to 3, **characterized in that** the measuring signals which are produced by the spectral measurement of the master and then digitalized are subjected to a reversible, preferably orthogonal, transformation or data compression, preferably the Karhunen-Loève transformation, and **in that** the transformation coefficients resulting from this transformation form the measuring data for the particular master and are used as an input variable ($\square$k) for the model (41, E) of the master (N), which is adapted to the copying material (F).

5. A method according to one of Claims 2 to 4, **characterized in that** an initial value is firstly determined for the model for the master (41, E), which is adapted to the copying material, **in that**, on the basis of the copy-specific measuring data and the master-specific measuring data, and on the basis of the exposure used during copying, the model (40, P) for the copying material (F), or the model (Pi) which is the inverse thereof, is then optimized until the root-mean-square error ($E_P$) is minimized or falls below the predeterminable critical value, and **in that**, when the model (40, P) for the copying material is optimized, or when the model (Pi) which is the inverse thereof is optimized, the model (41, E) for the master (N), which is adapted to the copying material (F), is optimized on the basis of the copy-specific measuring data and the master-specific measuring data, and on the basis of the exposure used during copying, until the root-mean-square error ($E_F$) is minimized or falls below the predeterminable critical value.

**Revendications**

1. Procédé d'étalonnage d'un photocopieur comportant les étapes de procédé suivantes :

a) l'original à copier est analysé par zones, de préférence ponctuellement, dans un poste de mesure (1) du copieur ;

b) la lumière de mesure transmise ou réfléchie par chaque zone d'analyse de l'original à copier, est acheminée vers un agencement de détecteurs (2), décomposée de manière spectrale et convertie en signaux électriques de mesure dépendant de la longueur d'onde et de l'intensité ;

c) les signaux électriques de mesure sont numérisés et à l'aide de ceux-ci des données de mesure spécifiques de l'original sont déterminées ;

d) sur la base des données de mesure déterminées, on détermine les quantités de lumière de copie nécessaires pour l'insolation, à l'aide d'un modèle (41, E), adapté au matériau de copie, pour l'original à copier (N), qui est représentatif du comportement du matériau de copie (F) en cas de variations de la composition spectrale de l'original à copier (N), et à l'aide d'un modèle (40, P) pour le matériau de copie, qui est représentatif des propriétés d' absorption du matériau de copie (F) en cas de variations de l'insolation, ou au moyen d'un modèle (Pi) inverse du premier,

e) sur la base des quantités de lumière de copie déterminées, on détermine des signaux de commande pour des filtres couleur et des obturateurs (7) prévus dans le poste de copie du copieur, qui sont introduits dans le parcours des rayons de copie, en fonction des signaux de commande pendant la copie de l'original à copier (N) sur le matériau de copie (F),

f) les copies ainsi réalisées sont développées dans un poste de développement (9),

**caractérisé par** les étapes de procédé suivantes :

g) les copies développées sont analysées par zones, de préférence ponctuellement, (OLD) ;

h) la lumière de mesure transmise ou réfléchie par chaque zone d'analyse du matériau de copie est acheminée vers un agencement de détecteurs (2), décomposée de manière spectrale et convertie en signaux électriques de mesure dépendant de la longueur d'onde et de l'intensité ;

i) les signaux électriques de mesure sont numérisés et à l'aide de ceux-ci des données de mesure spécifiques de l'original sont déterminées ;

j) sur la base des données de mesure de la copie, des données de mesure spécifiques de l'original ainsi que de l'insolation utilisée pour la copie, le modèle (41, E) adapté au matériau de copie, de l'original à copier (N) et le modèle (40, P) pour le matériau de copie (F), ou le modèle (Pi) inverse de celui-ci sont vérifiés et éventuellement optimisés quant à des critères de précision ($E_F$, $E_P$) qui peuvent être prédéterminés.

**2.** Procédé selon la revendication 1, **caractérisé en ce que** les copies sont analysées (OLD) à la sortie du poste de développement (9).

**3.** Procédé selon la revendication 1 ou 2, **caractérisé en ce que** le modèle (41, E) adapté au matériau de copie, pour l'original à copier (N), ainsi que le modèle (40, P) pour le matériau de copie ou le modèle inverse (Pi) à celui-ci sont optimisés, sur la base des données de mesure spécifiques de la copie, jusqu'à ce que l'erreur moyenne carrée ($E_F$, $E_P$) en tant que critère de précision soit minimisée pour le modèle respectif, ou jusqu'à ce qu'une valeur de seuil pouvant être prédéterminée soit sous-dépassée, l'optimisation du modèle respectif s'effectuant **en ce que** l'autre modèle n'est pas modifié pendant cette optimalisation.

**4.** Procédé selon l'une des revendications 1 à 3, **caractérisé en ce que** les signaux de mesure qui résultent de la mesure spectrale de l'original à copier et qui sont ensuite numérisés, sont soumis à une transformation réversible de préférence orthogonale ou à une compression des données, de préférence à la transformation de Karhunen-Loève, et **en ce que** les coefficients de transformation qui ressortent de cette transformation forment les données de mesure pour l'original à copier respectif, et sont utilisés comme grandeurs d'entrée ($\Delta k$) pour le modèle (41, E) adapté au matériau de copie (F) de l'original à copier (N).

**5.** Procédé selon l'une des revendications 2 à 4, **caractérisé en ce qu'**on détermine d'abord une valeur initiale pour le modèle, adapté au matériau de copie, pour l'original à copier (41, E), **en ce qu'**ensuite, sur la base des données de mesure spécifiques de la copie, des données de mesure spécifiques de l'original, ainsi que sur la base de l'insolation utilisée pendant la copie, on optimise le modèle (40, P) pour le matériau de copie (F) ou le modèle inverse (Pi), jusqu'à ce que l'erreur moyenne carrée ($E_P$) soit minimisée ou passe au-dessous de la valeur seuil qui peut être prédéterminée, et **en ce qu'**ensuite, lorsque le modèle (40, p) pour le matériau de copie est optimisé ou lorsque le modèle inverse (Pi) est optimisé, le modèle (41, E) adapté au matériau de copie (F), pour l'original à copier (F), est optimisé, sur la base des données de mesure spécifiques de la copie, des données de mesure spécifiques de l'original, ainsi que sur la base de l'insolation utilisée pendant la copie, jusqu'à ce que l'erreur moyenne carrée ($E_F$) soit minimisée ou passe au-dessous de la valeur de seuil qui peut être prédéterminée.

**Fig. 1**

Fig. 2

Fig. 3

Fig. 4

Nichtlinearitäten

Papier-Matrix P

$g_Y(\Delta e_B)$ 400

$g_M(\Delta e_G)$ 401

$g_C(\Delta e_R)$ 402

P

Fig. 5

Inverse Papiermatrix $P^{-1}$

Inverse
Charakteristische
Kurven

Pi

$g_Y(\Delta e_B)^{-1}$ 403

$g_M(\Delta e_G)^{-1}$ 404

$g_C(\Delta e_R)^{-1}$ 405

Fig. 6

16

S1

Bestimme Anfangswert
für Belichtungs-Matrix

S2

Optimiere Inv.
PapierModell unter
Verwendung der
aktuellen Belichtungs-
Matrix

S3

Optimiere
Belichtungsmatrix
unter Verwendung des
aktuellen Inv.
Papiermodells

S4

Sind
$E_F$ und $E_P$
klein genug?

Nein

Ja

Fig. 7

Fig. 8